# EUROPÄISCHE PATENTSCHRIFT

(11) **EP 0 657 327 B1**
(45) Veröffentlichungstag und Bekanntmachung des Hinweises auf die Patenterteilung: **08.03.2000**
(21) Anmeldenummer: 94119463.1
(22) Anmeldetag: 09.12.1994
(51) Int. Cl.: B60R 21/13, F16C 29/02

(54) **Führungsbuchse für einen Überrollbügel**
Guide bush for a roll bar
Manchon de guidage pour un arceau de sécurité

(30) Priorität: 13.12.1993 DE 4342403
(43) Veröffentlichungstag der Anmeldung: 14.06.1995
(73) Patentinhaber: ISE Innomotive Systems Europe GmbH, 51702 Bergneustadt (DE)
(72) Erfinder: Braun, Achim, D-51588 Nümbrecht (DE); Nowack, Reinhard, D-57489 Drolshagen (DE); Löwen, Jakob, D-51702 Bergneustadt (DE); Nass, Michael, D-51702 Bergneustadt (DE)
(74) Vertreter: Fuchs Mehler Weiss & Fritzsche

(56) Entgegenhaltungen:
- EP-A- 0 504 482
- FR-A- 2 532 700
- GB-A- 2 004 956
- US-A- 4 208 075

## Beschreibung

Die vorliegende Erfindung geht aus von einer Führungsbuchse mit den Merkmalen des Oberbegriffs von Anspruch 1.

Derartige Führungsbuchsen dienen dazu, eine möglichst reibungsfreie Ausfahr- und Einfahrbewegung des Überrollbügels zu gewährleisten.

Die EP-0 459 213 B1 zeigt eine bekannte Führungsbuchse, die an einem gehäusefesten Standort befestigt ist, welche zur Innenführung eines aufgeschobenen Schenkels eines Überrollbügels dient. Bei der Führungsbuchse handelt es sich um eine rein zylindrische Hülse, welche nicht näher beschrieben ist. Zur Erhöhung der Gleitfähigkeit dürfte sie aus PTFE oder einem ähnlichen Kunststoff bestehen.

Wenn ein Überrollbügel aber nicht nur im Crashfall, also bei Gefahr eines Fahrzeugüberschlages, ausgefahren werden soll, sondern auch über eine sogenannte Komfortbetätigung ausfahrbar sein soll, dann kommt es bei Führungsbuchsen der bekannten Art zu einem erhöhten Abrieb. Im Laufe der Zeit stellt sich dadurch ein Spiel zwischen der Führungsbuchse und der sie umgebenden zylindrischen Hohlraumwand ein, welches zu Klappergeräuschen führt. Außerdem birgt ein solches Spiel die Gefahr einer Verkantung bei einer Ausfahrbewegung.

Die GB-A 20 04 956, die dem Oberbegriff des Anspruchs 1 entspricht, zeigt eine Führungsbuchse der eingangs bezeichneten Art mit radial nach außen federnd angeformten Zungen. Die federnde Vorspannung ist dabei jedoch relativ gering und hat zudem keine hohe Standzeit.

Die Aufgabe der vorliegenden Erfindung besteht daher darin, eine Führungsbuchse der eingangs beschriebenen Art zu schaffen, welche auch bei häufiger Betätigung des Überrollbügels eine dauerhafte Spielfreiheit gewährt, dabei aber nur geringe Reibung erzeugt.

Diese Aufgabe wird gelöst durch die kennzeichnenden Merkmale des Anspruches 1.

Durch eine erzwungene elastische Vorspannung der radial nach außen gewölbten Zungen mittels des separaten Federelementes wird eine dauerhafte Spielfreiheit gewährleistet, auch wenn die Zungen selbst durch Materialermüdung an Elastizität nachlassen. Die geringe Kontaktfläche zwischen den Zungen und der umgebenden Hohlraumwand hält die Reibung klein.

Dabei ist es unerheblich, ob der bewegliche Überrolbügel den zylindrischen Körper oder die zylindrische Hohlraumwand bildet, d.h. ob eine Innenführung oder eine Außenführung des Überrollbügels vorgesehen ist. Wichtig ist lediglich, daß der zylindrische mittlere Axialabschnitt der Führungsbuchse, welcher eine große Berührungsfläche mit dem zylindrischen Körper hat, mit letzterem starr verbunden ist, während die Zungen mit kleiner Berührungsfläche am zylindrischen Hohlraum gegen diesen beweglich sind. Die Gestaltung der Führungsbuchse mit jeweils mindestens vier Zungen an jeder axialen Seite, zwischen welchen jeweils nur ein Schlitz vorgesehen ist, bietet bei gleichmäßiger radialer Kräfteverteilung ein hohes Maß an Stabilität.

Dem gleichen Zweck dient auch ein Querschnitt der Führungshülse in Form eines geschlossenen Rings.

Ein durchbrochener Ring als Querschnitt erhöht die Flexibilität der Führungsbuchse und erleichtert zugleich die Anbringung am zylindrischen Körper.

Damit es nicht zu einer ungleichen radialen Kräfteverteilung kommt, welche schließlich doch zu einem erhöhten Verschleiß und Sicherheitseinbußen führen könnte, empfielt es sich, dem Durchbruch einen Winkelbereich einzuräumen, der 50° nicht überschreitet.

Eine besonders einfache und preiswerte radiale Vorspannung der Zungen läßt sich durch die Verwendung eines durch einen durchbrochenen Ring gebogenen Federstahldrahtes erzielen. Dabei hat die Gestaltung als durchbrochener Ring für den Federdraht den Vorteil, daß auch bei eventuellem Abrieb oder nachlassender Formtreue der Zungen eine radiale Nachstellung erfolgen kann, die bei einem geschlossenen Drahtring nicht möglich wäre. Zur Vermeidung einer ungünstigen Positionierung der Enden des Federdrahtes, bei welcher beispielsweise eine der Zungen unbelastet bleiben könnte, kann eine Verdrehsicherung nach einem der Ansprüche 7 oder 8 vorgesehen sein.

Eine nähere Erläuterung bevorzugter Ausführungsbeispiele erfolgt nun anhand der Beschreibung von Zeichnungen in 8 Figuren.

Es zeigt:
- Fig. 1: einen Schnitt durch eine Ausführungsform einer erfindungsgemäßen Führungsbuchse,
- Fig. 2: eine seitliche Draufsicht auf die Führungsbuchse nach Fig. 1,
- Fig. 3: einen Teilschnitt entlang der Linie C-C in Fig. 1,
- Fig. 4: eine Teildraufsicht auf eine zweite Ausführungsform einer erfindungsgemäßen Führungsbuchse,
- Fig. 5: einen Teilschnitt durch die Führungsbuchse nach Fig. 4,
- Fig. 6: eine Teildraufsicht auf eine dritte Ausführungsform einer erfindungsgemäßen Führungsbuchse,
- Fig. 7: einen Teilschnitt durch eine Führungsbuchse nach Fig. 6
- Fig. 8: einen Überrollbügel als Einbaubeispiel für eine erfindungsgemäße Führungsbuchse.

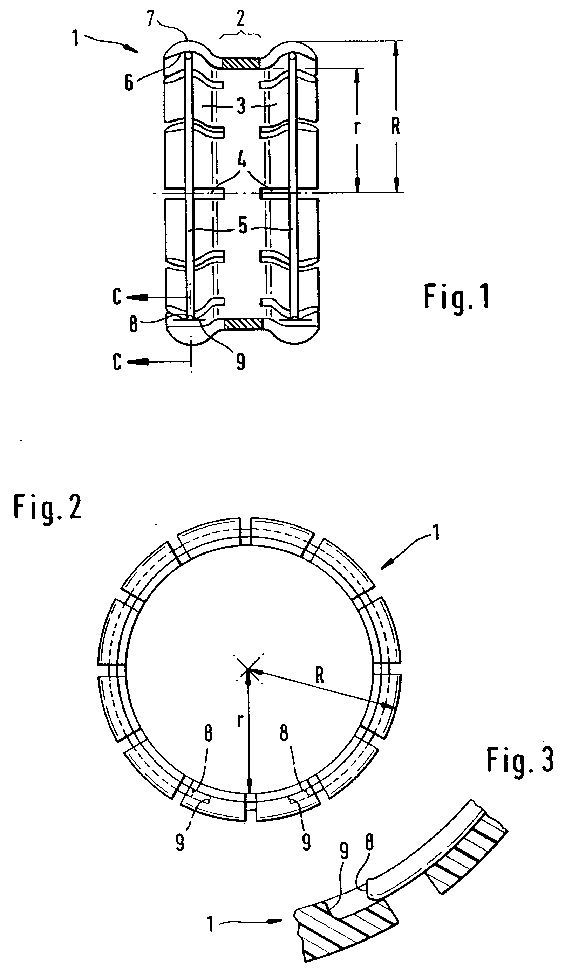

In Fig. 1 ist die Führungsbuchse 1 in einem Schnitt längs ihrer Zylinderachse dargestellt.

Deutlich läßt sich der mittlere Axialabschnitt 2 erkennen, welcher zylindrisch geformt ist. Zu beiden axialen Seiten sind die Zungen 3 angeformt, welche voneinander durch die Schlitze 4 getrennt sind. Die Tiefe der Schlitze ist durch die Breite des mittleren Axialabschnitts 2 begrenzt. Die Zungen 3 werden radial nach außen hin von den zu jeweils einem durchbrochenen Ring geformten Federdrähten 5 beaufschlagt. Der kleinste Innenradius r der Führungsbuchse 1 wird vom mittleren Axialabschnitt 2 gebildet, welcher an einem zylindrischen Körper, beispielsweise einem starr mit dem Fahrzeug verbundenen Standrohr anliegt. Der größte Außenradius R wird von den Außenwölbungen 7 der Zungen 3 gebildet, welche mit diesem größten Außenradius an einer zylindrischen Hohlraumwand, beispielsweise an einer inneren Mantelfläche eines Überrollbügelschenkels anliegen. In Höhe der größten Außenradien R befinden sich innerhalb der Führungsbuchse 1 auch die größten Innenradien, in welche die Federdrähte 5 eingelegt sind.

In geringem Abstand von den Drahtenden 8 sind die Innenwölbungen 6 jeweils durch einen radialen Vorsprung 9 aufgehoben, wobei dieser radiale Vorsprung 9 nicht ganz so weit nach innen ragt, daß er den kleinsten Innenradius r der Führungsbuchse 1 erreicht. Dies ist besonders gut in Fig. 2 zu erkennen. Der Abstand zwischen den radialen Vorsprüngen 9 und den Drahtenden 8 erhöht die radiale Kompressibilität der Zungen, welche nicht gegeben wäre, wenn der Umfang der Federdrähte nicht veränderbar wäre. Damit die Drahtenden 8 der Führungsbuchse 1 keinen Schaden zufügen, sind sie leicht nach innen angebogen oder angefast. Dies wird deutlich in Fig. 3.

Als Material wird in vorteilhafter Weise der Kunststoff Polyoxymethylen, ein anderes Polyacetal oder auch Polyamid gewählt, welches dauerhafte Formtreue und Elastizität der Zungen 3 gewährleistet. Die Federdrähte 5 sind aus üblichem Federstahl gefertigt.

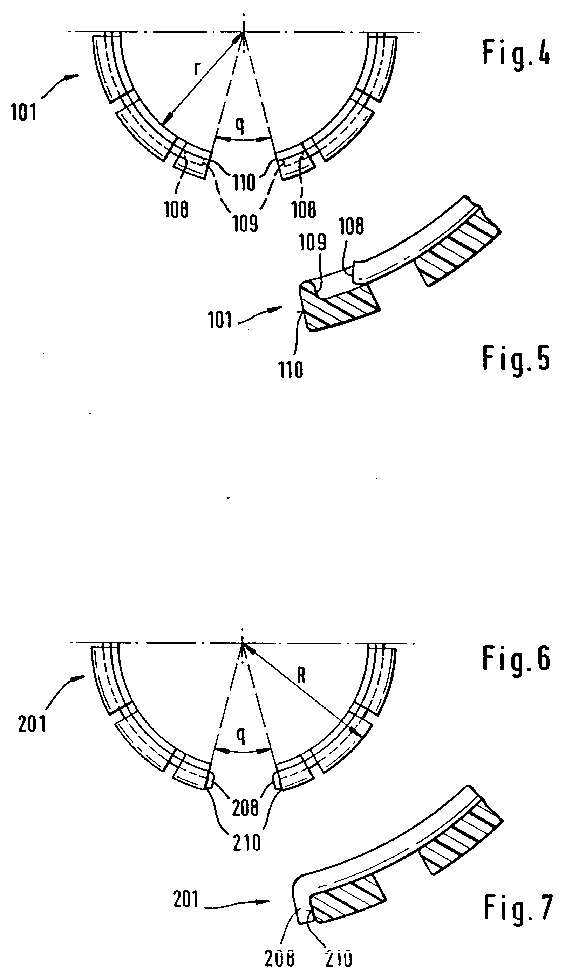

Die Führungsbuchse 101 nach Fig. 4 ist nur in einer Teilansicht dargestellt, wobei die obere Hälfte gemäß Fig. 2 zu ergänzen ist. Die Führungsbuchse 101 unterscheidet sich von der zuvor beschriebenen Führungsbuchse 1 dadurch, daß der in Fig. 2 dargestellte geschlossene Ringkörper hier durchbrochen ist. Der Winkel q welcher von den Kanten 110 des Durchbruchs eingeschlossen wird, beträgt hier etwa 30°. Hierdurch kann auch der kleinste Innenradius r sich an die Gegebenheiten des von ihm umgebenen zylindrischen Körpers anpassen, was im Ausführungsbeispiel nach den Fig. 1 bis 3 nicht möglich ist. Der Winkel q darf allerdings nicht zu groß gewählt werden, da es sonst zu Stabilitätseinbußen kommt. Die Drahtenden 108 sind hier entsprechend wie in Fig. 3 leicht nach innen angebogen. Die radialen Vorsprünge 109 bilden gerade eine Begrenzung des Weges der Drahtenden zu den Duchbruchkanten 110 hin. Dies ist im Detail in Fig., 5 dargestellt.

Auch das dritte Ausführungsbeispiel einer Führungsbuchse 201 nach Fig. 6 und 7 weist einen Durchbruch mit dem Öffnungswinkel q auf. Diese Ausführungsform unterscheidet sich von der nach den Fig. 4 und 5 dadurch, daß es keine radialen Vorsprünge gibt, sondern das die Drahtenden 208 über die Durchbruchkanten 210 hinausragen und radial nach außen umgebogen sind. Dabei ragen diese Enden über den größten äußeren Radius R nicht hinaus, so das sie der sie umgebenden zylindrischen Hohlraumwand keine Beschädigungen zufügen können.

Alle Ausführungsformen haben zufällig gemeinsam, das sie an beiden axialen Seiten jeweils 12 Zungen aufweisen. Diese Zahl ist nicht zwingend. Es können auch wesentlich weniger, mindestens vier Zungen an jeder Seite vorhanden sein. Aus Stabilitätsgründen ist es jedoch wichtig, daß die Zungen einen größeren Winkelbereich einnehmen als jeweils die dazwischen liegenden Schlitze.

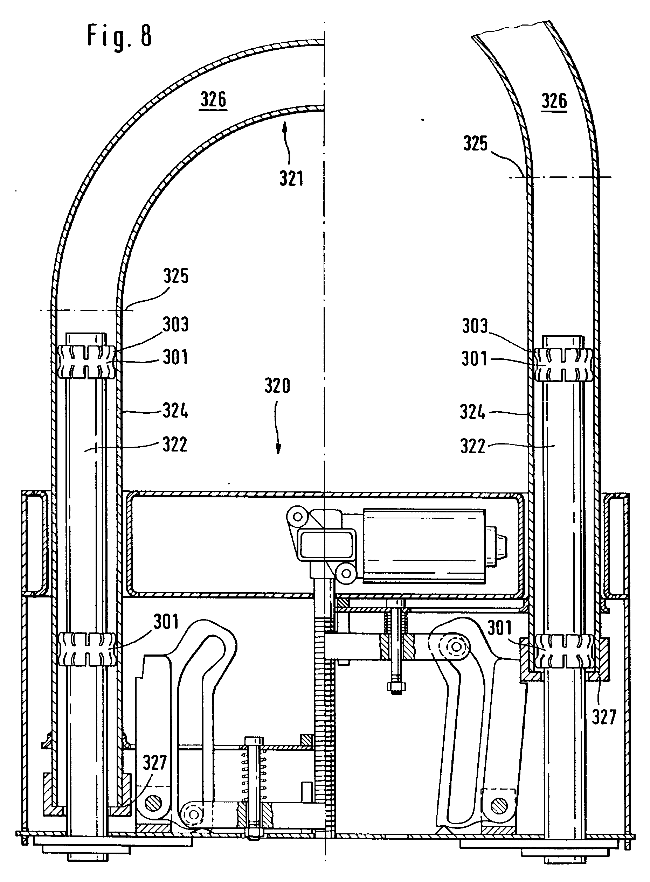

Als Beispiel für die Anordnung einer erfindungsgemäßen Führungsbuchse ist in Fig. 8 ein Überrollbügelsystem dargestellt, welches eine starr mit dem Fahrzeug verbundene Gehäusekassette 320 aufweist, in welcher alle Elemente zum Antrieb und zur Verriegelung des gegen die Gehäusekassette beweglichen Bügelrohres 321 angeordnet sind. Da der Antrieb und die Verriegelung des Überrollbügels nicht der Gegenstand der vorliegenden Erfindung ist, soll darauf nicht näher eingegangen werden.

Am Boden der Gehäusekassette 320 sind zwei Standrohre 322 befestigt, welche zur Führung der Ausfahrbewegung des Bügelrohres 321 dienen. An diesen Standrohren 322 sind jeweils zwei Führungsbuchsen 301 angebracht, welche mit ihren Innenradien wie beschrieben an den Standrohren 322 anliegen. Das Bügelrohr 321 besteht aus einem halbkreisförmig gebogenen Basisteil 326, welches die zwei geradlinigen Bügelschenkel 324 verbindet. Diese parallel verlaufenden Bügelschenkel 324 sind auf die Standrohre 322 aufgeschoben, so daß sie die Standrohre 322 und die Führungsbuchsen 301 umgeben. Die Führungsbuchsen 301 liegen mit ihren Zungen 303 an den inneren Mantelflächen der Bügelschenkel 324 an. Sie sind an den Standrohren 322 derart befestigt, daß jeweils die untere Führungsbuchse 301 sich in einer Hülle befindet, welche bei ausgefahrenem Bügelrohr 321 gerade von den Schenkelenden 327 noch nicht erreicht wird. Die oberen Führungsbuchsen 301 sind in einer Höhe an den Standrohren 322 befestigt, welche bei eingefahrenem Bügelrohr 321 noch in den Bereich der geradlinigen Bügelschenkel 324 fällt, also unterhalb des Übergangs 325 der Bügelschenkel 324 zum gekrümmten Basisteil 326.

### Bezugszeichenliste

- 1: Führungsbuchse
- 2: mittlerer Axialabschnitt
- 3: Zungen
- 4: Schlitze
- 5: Federdrähte
- 6: Innenwölbung
- 7: Außenwölbung
- 8: Drahtenden
- 9: Vorsprünge
- 101: Führungsbuchse
- 108: Drahtenden
- 109: Vorsprünge
- 110: Durchbruchkanten
- 201: Führungsbuchse
- 208: Drahtenden
- 210: Durchbruchkanten
- 301: Führungsbuchse
- 303: Zungen
- 320: Gehäusekassette
- 321: Bügelrohr
- 322: Standrohre
- 324: Bügelschenkel
- 325: Übergang
- 326: Basisteil
- 327: Schenkelende

## Patentansprüche

1. Führungsbuchse (1, 101, 201, 301) aus Kunststoff zur spielfreien Abstützung und Axialführung eines zylindrischen Körpers in einem zylindrischen Hohlraum, beispielsweise eines Standrohres (322) in einem hohlen zylindrischen Bügelschenkel (324) eines geradlinig ausfahrbaren Überrollbügels (321) für Kraftfahrzeuge, mit einem Axialabschnitt (2), dessen Innenkontur der Außenkontur des Körpers angepaßt ist und an ihm entsprechend anliegt, und mit mehreren beidseitig an den Axialabschnitt (2) angeformten Zungen (3, 303), die radial nach außen gewölbt, und die federnd nach außen gerichtet und vorgespannt sind, dadurch gekennzeichnet, daß
an jedem axialen Ende des Axialabschnittes (2) ein Satz Zungen (3, 303) angeformt ist, und die Zungen (3, 303) zur Anlage an der Hohlraum-Innenwand mit einer Außenwölbung (7) versehen sind, und daß
jedem Satz Zungen ein Federelement in Form eines Drahtringes (5) zugeordnet ist, der jeweils am Umfang der radialen Innenseite der zugehörigen Zungen anliegt und diese radial nach außen elastisch vorspannt.

2. Führungsbuchse nach Anspruch 1, dadurch gekennzeichnet, daß an beiden axialen Enden jeweils einen Satz von mindestens vier Zungen (3) angeordnet ist, deren Breite in Umfangsrichtung jeweils größer ist als der Abstand zu den benachbarten Zungen.

3. Führungsbuchse nach Anspruch 1 oder 2, dadurch gekennzeichnet, daß ihr Querschnitt einen geschlossenen Ring bildet.

4. Führungsbuchse nach Anspruch 1 oder 2, dadurch gekennzeichnet, daß ihr Querschnitt einen durchbrochenen Ring bildet, wobei die an den Durchbruch angrenzenden Zungen nicht als benachbart gelten.

5. Führungsbuchse nach Anspruch 4, dadurch gekennzeichnet, daß der Durchbruch einen kleineren Winkelbereich (q) als 50° einnimmt.

6. Führungsbuchse nach einem der Ansprüche 1 bis 5, dadurch gekennzeichnet, daß der Drahtring (5) durch einen durchbrochenen Ring aus Federstahldraht gebildet ist.

7. Führungsbuchse nach Anspruch 6, dadurch gekennzeichnet, daß die Zungen (3), an denen sich die Enden (8, 108) des durchbrochenen Ringes (5) aus Federstahldraht befinden, radial nach innen weisende Vorsprünge (9, 109) aufweisen.

8. Führungsbuchse nach Anspruch 4 oder 5, und 6 oder 7, dadurch gekennzeichnet, daß die Enden (208) des durchbrochenen Ringes (5) aus Federstahldraht an den Kanten (210) des Durchbruchs radial nach außen umgebogen sind.

## Claims

1. A guide bush (1, 101, 201, 301) of plastics material for supporting and axially guiding a cylindrical body, without play, in a cylindrical cavity, for example an upright pipe (322) in a hollow cylindrical arm (324) of a rectilinearly extensible roll bar (321) for motor vehicles, comprising an axial portion (2) the internal contour of which is matched to and accordingly rests against the external contour of the body, and comprising a plurality of tongues (3, 303) which are integrally formed on both sides of the axial portion (2) and which are curved radially outward and are resiliently oriented and biased outward, characterised in that
a set of tongues (3, 303) is integrally formed on each axial end of the axial portion (2), and the tongues (3, 303) are provided with a convex curve (7) for resting against the inside wall of the cavity, and
there is associated with each set of tongues a spring element in the form of a wire ring (5) which rests against the periphery of the radial inner side of the associated tongues and resiliently biases them radially outward.

2. A guide bush according to claim 1, characterised in that a set of at least four tongues (3) is arranged at both axial ends, the width of each of which tongues in the circumferential direction is greater than the distance to the adjacent tongues.

3. A guide bush according to claim 1 or 2, characterised in that its cross-section forms a closed ring.

4. A guide bush according to claim 1 or 2, characterised in that its cross-section forms an open ring, wherein the tongues bordering on the opening are not regarded as being adjacent.

5. A guide bush according to claim 4, characterised in that the opening occupies an angular range smaller than 50°.

6. A guide bush according to any one of claims 1 to 5, characterised in that the wire ring (5) is formed by an open ring of spring steel wire.

7. A guide bush according to claim 6, characterised in that the tongues (3) on which the ends (8, 108) of the open ring (5) of spring steel wire are situated have projections (9, 109) pointing radially inward.

8. A guide bush according to claim 4 or 5 and claim 6 or 7, characterised in that the ends (208) of the open ring (5) of spring steel wire are bent radially outward at the edges (210) of the opening.

## Revendications

1. Bague de guidage (1, 101, 201, 301) en matière plastique pour l'appui et le guidage axial sans jeu d'un corps cylindrique dans une cavité cylindrique, par exemple d'un tube de montant (322) dans une branche cylindrique creuse (324) d'un arceau de sécurité anti-tonneau (21) pouvant être mis en extension en ligne droite, pour véhicules automobiles, comprenant un segment axial (2) dont le contour intérieur est adapté au contour extérieur du corps et s'appuie sur ce dernier de façon appropriée, et plusieurs languettes (3, 103) venues de matière sur la section axiale (2), qui sont bombées radialement vers l'extérieur et qui sont dirigées et précontraintes élastiquement vers l'extérieur, caractérisée
en ce qu'à chaque extrémité axiale du segment axial (2) est formé un jeu de languettes (3, 303) et les languettes (3, 303) sont munies d'un bombement extérieur (7) pour s'appuyer contre la paroi intérieure de la cavité, et
en ce qu'à chaque jeu de languettes, est associé un élément élastique présentant la forme d'un anneau en fil (5) qui est appuyé contre la circonférence du côté radialement intérieur des languettes correspondantes et applique à ces dernières une précontrainte élastique dirigée radialement vers l'extérieur.

2. Bague de guidage selon la revendication 1, caractérisée en ce qu'à chacune des deux extrémités axiales est disposé un jeu d'au moins quatre languettes (3) dont la largeur, dans la direction circonférentielle, est supérieure à leur distance d'écartement par rapport aux languettes voisines.

3. Bague de guidage selon la revendication 1 ou 2, caractérisée en ce que sa section forme un anneau fermé.

4. Bague de guidage selon la revendication 1 ou 2, caractérisée en ce que sa section forme un anneau brisé, les languettes limitrophes de la coupure n'étant pas considérées comme adjacentes.

5. Bague de guidage selon la revendication 4, caractérisée en ce que la coupure occupe une région angulaire (q) de moins de 50°.

6. Bague de guidage selon une des revendications 1 à 5, caractérisé en ce que l'anneau en fil (5) est formé par un anneau brisé en fil d'acier à ressorts.

7. Bague de guidage selon la revendication 6, caractérisé en ce que les languettes (3) auxquelles se trouvent les extrémités (8, 108) de l'anneau brisé (5) en fil d'acier à ressorts présentent des saillies (9, 109) pointant radialement vers l'intérieur.

8. Bague de guidage selon la revendication 4 ou 5 et 6 ou 7, caractérisée en ce que les extrémités (208) de l'anneau brisé (5) en fil d'acier à ressorts sont recourbées radialement vers l'extérieur aux bords (210) de la coupure.
